# EUROPÄISCHE PATENTSCHRIFT

(11) **EP 2 099 655 B1**
(45) Veröffentlichungstag und Bekanntmachung des Hinweises auf die Patenterteilung: **10.04.2013**
(21) Anmeldenummer: 07818209.4
(22) Anmeldetag: 18.09.2007
(51) Int. Cl.: B60R 21/13

(54) **CABRIO-KRAFTWAGEN MIT AKTIVEM ÜBERROLLSCHUTZSYSTEM**
CONVERTIBLE MOTOR VEHICLE WITH ACTIVE ROLLOVER PROTECTION
VOITURE CABRIOLET AVEC SYSTEME ACTIF DE PROTECTION AU RETOURNEMENT

(30) Priorität: 01.12.2006 DE 102006056754
(43) Veröffentlichungstag der Anmeldung: 16.09.2009
(73) Patentinhaber: Daimler AG, 70327 Stuttgart (DE)
(72) Erfinder: GÄRTNER, Jan, 71069 Sindelfingen (DE); MEIER, Thomas, 13465 Berlin (DE); SCHRADER, Jürgen, 71093 Weil im Schönbuch (DE); ZYGAN, Andreas, 76316 Malsch (DE)
(74) Vertreter: JENSEN & SON
(86) Internationale Anmeldenummer: PCT/EP2007/008105
(87) Internationale Veröffentlichungsnummer: WO 2008/064729

(56) Entgegenhaltungen:
- EP-A- 1 818 202
- DE-A1- 10 318 076
- DE-A1- 10 357 053
- DE-B3- 10 353 448

## Beschreibung

Die Erfindung betrifft einen Cabrio-Kraftwagen mit wenigstens zwei Fahrzeugsitzreihen und mit jeweils wenigstens zwei Seitentüren der im Oberbegriff des Patentanspruchs 1 angegebenen Art.

Ein solcher Cabrio-Kraftwagen ist beispielsweise bereits aus der DE 103 57 398 B3 als bekannt zu entnehmen, welcher hintereinander zwei Fahrzeugsitzreihen umfasst, welche über eine jeweilige seitliche vordere bzw. hintere Seitentür zugänglich sind. Zwischen den beiden Seitentüren jeder Wagenseite ist dabei eine jeweils zugeordnete Türsäule angeordnet, welche sich nach oben hin bis nahe unterhalb des Verdecks des offenen Kraftwagens erstreckt. Innerhalb der jeweiligen Türsäule ist dabei jeweils ein Stabelement eines aktiven Überrollschutzsystems angeordnet, welches im Falle eines drohenden Überschlags des Kraftwagens an der Oberseite der zugeordneten Türsäule translatorisch ausgefahren wird.

Ein gattungsgemäßer Cabrio-Kraftwagen ist aus der DE 103 57 053 A1 bekannt. Dieser weist wenigstens zwei Fahrzeugsitzreihen und jeweils wenigstens zwei Seitentüren auf, zwischen welchen eine jeweils zugeordnete Türsäule angeordnet ist, in deren Bereich ein aktives Überrollschutzsystem vorgesehen ist, wobei die Türsäulen nach oben hin im Bereich einer zugeordneten Bordkante des Kraftwagens enden und wobei das Überrollschutzsystem in einer Ablagestellung zumindest im Wesentlichen unterhalb der Bordkante des Kraftwagens angeordnet ist. Ein weiterer gattungsgemäßen Cabrio-Kraftwagen ist aus der DE 10 2006 008 290 A1 bekannt.

Aufgabe der vorliegenden Erfindung ist es, ein Cabrio-Kraftwagen der eingangs genannten Art zu schaffen, bei welchem das Überrollschutzsystem auf sichere und komfortable Weise in den Cabrio-Kraftwagen integriert ist.

Diese Aufgabe wird erfindungsgemäß durch einen Cabrio-Kraftwagen mit den Merkmalen des Patentanspruchs 1 gelöst. Vorteilhafte Ausgestaltungen mit zweckmäßigen und nichttrivialen Weiterbildungen der Erfindung sind in den übrigen Patentansprüchen angegeben.

Um eine komfortable und dennoch äußerst sichere Integration des Überrollschutzsystems in den Cabrio-Kraftwagen zu ermöglichen, ist es vorgesehen, dass die Türsäulen nach oben hin im Bereich bzw. auf Höhe einer zugeordneten Bordkante des Kraftwagens enden, wobei das Überrollschutzsystem in einer Ablagestellung zumindest im Wesentlichen unterhalb bzw. auf Höhe der Bordkante des Kraftwagens angeordnet ist. Erfindungsgemäß umfasst das Üben-ollschutzsystem ein Verbindungselement, über welches die beiden Türsäulen miteinander verbunden sind. Mit anderen Worten ist es vorgesehen, dass beim erfindungsgemäßen Cabrio-Kraftwagen - im Unterschied zu demjenigen gemäß der DE 103 57 398 B3 - die Türsäulen lediglich bis etwa auf Höhe der seitlich zugeordneten Bordkante des Kraftwagens aufragen, da sich hierdurch für die Sitzinsassen eine bedeutend komfortablere Aussicht nach außen hin ergibt. Da erfindungsgemäße demzufolge die Türsäulen - beispielsweise bei einem Radfahrer - oder Schulterblick - auch nicht im Blickfeld des Fahrers liegen, kann darüber hinaus die Gefahr von Unfällen beispielsweise mit einem Radfahrer reduziert und demzufolge die Verkehrssicherheit des vorliegenden Cabrio-Kraftwagens erhöht werden. Nicht zuletzt ergibt sich aufgrund der Tatsache, dass die Türsäulen auf der Höhe der Bordkante des Kraftwagens enden, eine höhere gestalterische Freiheit für die Konstrukteure des Verdecks bzw. des Aufbaus oberhalb der Bordkante.

Obwohl die Türsäulen erfindungsgemäß nach oben hin bloß bis in den Bereich einer zugeordneten Bordkante verlaufen, weisen diese jedoch eine hinreichende Höhe auf, damit ausfahrende Teile des Überrollschutzsystems aus der Ablagestellung in eine entsprechend höhenverlagerte Schutzstellung gebracht werden können, um hierdurch Verletzungen der Sitzinsassen bei einem Überschlag des Kraftwagens zu vermeiden. Die Anordnung des Überrollschutzsystems im Bereich und mit einem Verbindungselement zwischen den Türsäulen wirkt dabei mit dem Rahmen der Windschutzscheibe des Kraftwagens zusammen, so dass insgesamt eine käfigartige Überrollkontur gebildet ist, wodurch Kopfverletzungen der Fahrzeuginsassen beim Überschlag verhindert oder zumindest auf ein unschädliches Maß reduziert werden können, da zu dem Boden ein Sicherheitsabstand eingehalten wird. Demzufolge ist es mit dem erfindungsgemäßen Überrollschutzsystem möglich, auch bei viertürigen Cabrio-Kraftwagen mit sehr großem, zu öffnendem Innenraumbereich einen hohen Sicherheitsstandard zu gewährleisten.

Weitere Vorteile, Merkmale und Einzelheiten der Erfindung ergeben sich aus der nachfolgenden Beschreibung von drei Ausführungsbeispielen sowie anhand der Zeichnungen; diese zeigen in:

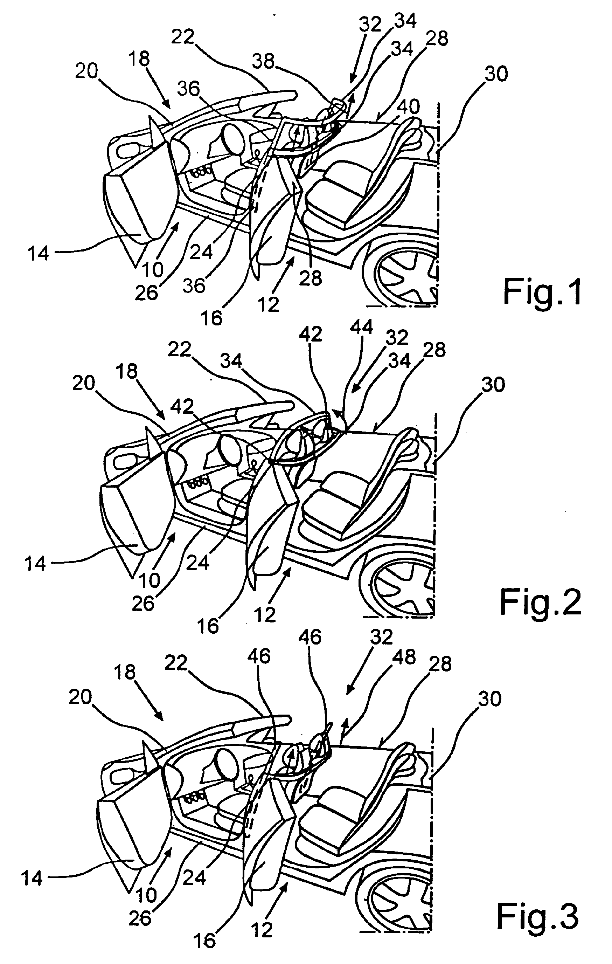

- Fig. 1: eine schematische und ausschnittsweise Perspektivansicht auf einen Cabrio-Kraftwagen mit zwei Fahrzeugsitzreihen und mit jeweils zwei Seitentüren, zwischen denen eine jeweilige, als B-Säule ausgebildete Türsäule angeordnet ist, wobei zwischen den Türsäulen ein Verbindungselement vorgesehen ist, welches vor bzw. bei einem Überschlag des Kraftwagens aus einer Ablagestellung etwa auf Höhe einer Bordkante des Kraftwagens in einer translatorischen Bewegung in eine nach oben verstellte Schutzstellung zu überführen ist;
- Fig. 2: eine schematische und ausschnittsweise Perspektivansicht auf den Cabrio-Kraftwagen gemäß Fig. 1, wobei das Verbindungselement zwischen den beiden Türsäulen in einer rotatorischen Bewegung um jeweilige Lagerstellen im Bereich der Türsäulen aus der Ablagestellung in die Schutzstellung zu verlagern ist; und in
- Fig. 3: eine schematische und ausschnittsweise Perspektivansicht auf den Cabrio-Kraftwagen gemäß den Fig. 1 und 2, wobei das Überrollschutzsystem den Türsäulen jeweils zugeordnete Stabelemente umfasst, welche in einer translatorischen Bewegung aus der Ablagestellung in eine Schutzstellung bewegbar sind.

In Fig. 1 ist in einer schematischen und ausschnittsweisen Perspektivansicht ein Cabrio-Kraftwagen dargestellt, welcher zwei Fahrzeugsitzreihen 10, 12 umfasst, die über auf beiden Seiten des Personenkraftwagens angeordnete vordere und hintere Seitentüren 14, 16 zugänglich sind. Die beiden - in Vorwärtsfahrtrichtung betrachtet - linken Seitentüren 14, 16 sind dabei geöffnet dargestellt. Von einem Windschutzscheibenrahmen 18 sind in Fig. 1 zwei A-Säulen 20 erkennbar, welche an ihren hinteren Enden über einen Dachquerträger 22 miteinander verbunden sind.

Zwischen den beiden einander seitlich zugeordneten Seitentüren 14, 16 ist jeweils eine zugehörige, als B-Säule ausgebildete Türsäule 24 angeordnet, welche von einem unterhalb in Fahrzeuglängsrichtung und horizontal verlaufenden Seitenschweller 26 nach oben hin absteht. Es ist erkennbar, dass die beiden Türsäulen 24 etwa auf Höhe einer jeweils seitlich zugeordneten Bordkante 28 des Kraftwagens enden. Es ist klar, dass die Türsäulen 24 mit ihren jeweiligen oberen Enden auch geringfügig unterhalb bzw. oberhalb der Bordkante 28 enden können. Insgesamt sollen die Türsäulen 24 jedoch bei geöffnetem Verdeck des offenen Kraftwagens nicht bzw. nur unwesentlich erkennbar sein.

Aus Fig. 1 ist darüber hinaus erkennbar, dass der Cabrio-Kraftwagen vorliegend bei geöffnetem Verdeck dargestellt ist. Dieses schließt sich an den Windschutzrahmen 18 bzw. an dessen Dachquerträger 22 nach hinten hin an und ist hinter der hinteren Fahrzeugsitzreihe 12 in einem hierfür vorgesehenen Verdeckstauraum 30 untergebracht.

Darüber hinaus ist aus Fig. 1 erkennbar, dass der Cabrio-Kraftwagen ein aktives Überrollschutzsystem 32 umfasst, welches bei der Ausführungsform gemäß Fig. 1 als wesentliches Bauteil ein Verbindungselement 34 umfasst, welches die beiden Türsäulen 24 miteinander verbindet und in einer Ablagestellung zumindest im Wesentlichen unterhalb bzw. auf Höhe der Bordkante des Kraftwagens angeordnet ist. Mittels von zwei Stabelementen 36 ist das Verbindungselement 34 vorliegend in einer im Wesentlichen translatorischen Bewegung - wie mit den Pfeilen 38 dargestellt - aus der unteren Ablagestellung in eine obere Schutzstellung überführbar. Das Verbindungselement 34 ist dabei an den oberen Enden der Stabelemente 36 fest angeordnet, wobei die Stabelemente 36 eine entsprechende Einrichtung bzw. Mechanik umfassen, mit welcher das Verbindungselement 34 vor bzw. bei einem Überschlag des Kraftwagens aktiv aus der Ablagestellung in die Schutzstellung zu verlagern ist. Aus Fig. 1 ist dabei erkennbar, dass das Verbindungselement 34 in seiner Schutzstellung in etwa parallel zu derjenigen Position verläuft, welche dieses in seiner Ablagestellung einnimmt.

Es ist klar, dass das Verbindungselement 34 in der üblichen Ablagestellung auch zur Verbindungsaussteifung des Cabrio-Kraftwagens beiträgt. Darüber hinaus kann unterhalb des Verbindungselement 34 eine Trennwand 40 vorgesehen sein, welche ebenfalls zwischen den beiden Türsäulen 24 verläuft. Darüber hinaus wäre es zudem denkbar, ein weiteres Verbindungselement vorzusehen, welches die Türsäulen 24 miteinander verbindet und bei einer überschlagsbedingten Verlagerung des Verbindungselements 34 in einer unteren Lage verbleibt.

In Fig. 2 ist in einer schematischen und ausschnittsweisen Perspektivansicht ein Cabrio-Kraftwagen gemäß Fig. 1 dargestellt, wobei das Verbindungselement 34 vorliegend über jeweilige Lagerstellen 42 im Bereich der zugehörigen Türsäule 24 gehalten ist. Hierdurch ist es möglich - wie aus Fig. 2 erkennbar ist - das Verbindungselement 34 in einer mit den Pfeilen 44 dargestellten rotatorischen Bewegung um die jeweiligen Lagerstellen 42 aus der Ablagestellung in die Schutzstellung aktiv zu bewegen. Es ist klar, dass hierzu beispielsweise im Bereich der Türsäulen 24 ein jeweiliger rotatorischer Antrieb vorgesehen ist, welcher das Verbindungselement 34 dann aus der Ablagestellung in die Schutzstellung überführt, wenn ein Überschlag droht.

Schließlich ist in Fig. 3 in einer schematischen und ausschnittsweisen Perspektivansicht der Cabrio-Kraftwagen gemäß den Fig. 1 und 2 dargestellt, wobei das dortige Überrollschutzsystem 32 zwei Stabelemente 46 umfasst, welche in einer translatorischen Bewegung - wie mit den Pfeilen 48 dargestellt - aus der Ablagestellung in die Schutzstellung bewegbar sind. Es ist klar, dass die Stabelemente 46 in der Ablagestellung vorzugsweise nicht erkennbar sind. Dabei ist es beispielsweise denkbar, die Stabelemente 46 in die Türsäulen 24 zu integrieren und im Bedarfsfall stirnseitig austreten zu lassen. Die Stabelemente 46 können dabei auch leicht gekrümmt ausgebildet sein, um an die Kontur der Türsäule 24 angepasst zu sein.

Insgesamt ist es allen drei Überrollschutzsystemen 32 gemeinsam, dass deren Verbindungselemente 34 (Fig. 1, Fig. 2) bzw. deren Stabelemente 46 (Fig. 3) in der Ablagestellung zumindest im Wesentlichen unterhalb bzw. auf Höhe der Bordkante des Kraftwagens enden. Bei einem drohenden Überschlag des Cabrio-Kraftwagens sind diese dann translatorisch bzw. rotatorisch in die höhenverstellte Schutzstellung zu bringen, um in dieser Position mit dem Windschutzscheibenrahmen 18 zusammenzuwirken und den Sitzinsassen einen hinreichenden Sicherheitsabstand zum Boden hin zu gewährleisten. Als im Rahmen der Erfindung mit umfasst ist es zu betrachten, dass natürlich hinter der hinteren Fahrzeugsitzreihe 12 ein weiteres Überrollschutzsystem vorgesehen sein kann.

## Patentansprüche

1. Cabrio-Kraftwagen mit wenigstens zwei Fahrzeugsitzreihen (10, 12) und mit jeweils wenigstens zwei Seitentüren (14, 16), zwischen welchen eine jeweils zugeordnete Türsäule (24) angeordnet ist, in deren Bereich ein aktives Überrollschutzsystem (32) vorgesehen ist, wobei die Türsäulen (24) nach oben hin im Bereich einer zugeordneten Bordkante (28) des Kraftwagens enden, und wobei das Überrollschutzsystem (32) in einer Ablagestellung zumindest im Wesentlichen unterhalb der Bordkante (28) des Kraftwagens angeordnet ist,
**dadurch gekennzeichnet,**
**dass** das Überrollschutzsystem (32) ein Verbindungselement (34) umfasst, über welches die beiden Türsäulen (24) miteinander verbunden sind.

2. Cabrio-Kraftwagen nach Anspruch 1,
**dadurch gekennzeichnet,**
**dass** das Verbindungselement (34) in einer translatorischen Bewegung aus der Ablagestellung in eine Schutzstellung bewegbar ist.

3. Cabrio-Kraftwagen nach Anspruch 1,
**dadurch gekennzeichnet,**
**dass** das Verbindungselement (34) in einer rotatorischen Bewegung um jeweilige Lagerstellen (42) im Bereich der Türsäulen (24) aus der Ablagestellung in eine Schutzstellung bewegbar ist.

4. Cabrio-Kraftwagen nach Anspruch 1,
**dadurch gekennzeichnet,**
**dass** das Überrollschutzsystem (32) den Türsäulen (24) jeweils zugeordnete Stabelemente (46) umfasst, welche in einer translatorischen Bewegung aus der Ablagestellung in eine Schutzstellung bewegbar sind.

5. Cabrio-Kraftwagen nach einem der vorhergehenden Ansprüche,
**dadurch gekennzeichnet,**
**dass** im Bereich der hinteren Fahrzeugsitzreihe (12) ein weiteres Überrollschutzsystem vorgesehen ist.

## Claims

1. Convertible motor vehicle comprising at least two rows of vehicle seats (10, 12) and at least two side doors (14, 16) each, between which an associated door post (24) is arranged in the region of which an active rollover protection system (32) is provided, wherein the door posts (24) end towards the top in the region of an associated belt line (28) of the motor vehicle and wherein the rollover protection system (32) is in a stowage position located at least substantially below the belt line (28) of the motor vehicle,
**characterised in that**
the rollover protection system (32) comprises a connecting element (34) by which the two door posts (24) are connected to one another.

2. Convertible motor vehicle according to claim 1,
**characterised in that**
the connecting element (34) can be brought from the stowage position into a protective position in a translational movement.

3. Convertible motor vehicle according to claim 1,
**characterised in that**
the connecting element (34) can be brought from the stowage position into a protective position in a rotational movement about bearing points (42) in the region of the door posts (24).

4. Convertible motor vehicle according to claim 1,
**characterised in that**
the rollover protection system (32) comprises bar elements (46) assigned to each of the door posts (24), which bar elements (46) can be brought from the stowage position into a protective position in a translational movement.

5. Convertible motor vehicle according to any of the preceding claims,
**characterised in that**
a further rollover protection system is provided in the region of the rear row of vehicle seats (12).

## Revendications

1. Voiture cabriolet avec au moins deux rangées de sièges (10, 12) et avec au moins deux portes latérales respectives (14, 16), entre lesquelles est disposé un montant de porte (24) respectivement associé, dans la région duquel est prévu un système actif (32) de protection au retournement, les montants de porte (24) se terminant vers le haut dans la région d'un rebord associé (28) du véhicule automobile, et dans une position de rangement, le système (32) de protection au retournement étant disposé au moins essentiellement en dessous du rebord (28) du véhicule automobile, **caractérisée en ce que** le système (32) de protection au retournement comprend un élément de liaison (34) qui relie l'un à l'autre les deux montants de porte (24).

2. Voiture cabriolet selon la revendication 1, **caractérisée en ce que** l'élément de liaison (34) peut se déplacer dans un mouvement translatoire de la position de rangement dans une position de protection.

3. Voiture cabriolet selon la revendication 1, **caractérisée en ce que** l'élément de liaison (34) peut se déplacer dans un mouvement rotatif autour des points d'appui respectifs (42) dans la région des montants de porte (24) de la position de rangement dans une position de protection.

4. Voiture cabriolet selon la revendication 1, **caractérisée en ce que** le système de protection au retournement (32) comprend des éléments de barre (46) associés respectivement aux montants de porte (24), lesquels éléments de barre peuvent se déplacer dans un mouvement translatoire de la position de rangement dans une position de protection.

5. Voiture cabriolet selon l'une quelconque des revendications précédentes, **caractérisée en ce qu'**il est prévu un second système de protection au retournement dans la région de la rangée de sièges arrière (2) du véhicule.
